# EUROPÄISCHE PATENTANMELDUNG

(11) **EP 1 538 031 A1**
(43) Veröffentlichungstag der Anmeldung: **08.06.2005**
(21) Anmeldenummer: 04028417.6
(22) Anmeldetag: 01.12.2004
(51) Int. Cl.: B60R 21/06

(54) **Laderaumschutzvorrichtung für ein Kraftfahrzeug**

(30) Priorität: 02.12.2003 DE 10356911
(71) Anmelder: BOS GmbH & Co. KG, 73760 Ostfildern (DE)
(72) Erfinder: Walter, Herbert, 73061 Ebersbach (DE); Schlecht, Werner P., 71665 Vaihingen/Enz (DE)
(74) Vertreter: Patentanwälte Ruff, Wilhelm, Beier, Dauster & Partner

(57) **Zusammenfassung**

Eine Laderaumschutzvorrichtung mit wenigstens einem flexiblen Flächengebilde (8), das zwischen einer kompakt abgelegten Ruheposition und einer ausgezogenen Funktionsposition beweglich angeordnet ist und an dessen in Auszugrichtung vorderen Stirnendbereich ein formstabiles Auszugteil (11) vorgesehen ist, das sich quer zur Auszugrichtung des Flächengebildes (8) erstreckt, wobei dem Auszugteil Führungsmittel zugeordnet sind, die das Auszugteil zwischen der ausgezogenen Funktionsposition und der Ruheposition des Flächengebildes (8) bewegen, und mit Sicherungsmitteln (18,18a), die das Auszugteil (11) in der ausgezogenen Funktionsposition des Flächengebildes (8) arretieren, ist bekannt.

Erfindungsgemäß sind die Sicherungsmittel (18,18a) - in Auszugrichtung des Flächengebildes gesehen - zumindest ungefähr auf gleicher Höhe oder hinter einem die Ruheposition des Auszugteiles (11) definierenden Raumabschnitt angeordnet.

## Beschreibung

Die Erfindung betrifft eine Laderaumschutzvorrichtung für ein Kraftfahrzeug mit wenigstens einem flexiblen Flächengebilde, das zwischen einer kompakt abgelegten Ruheposition und einer ausgezogenen Funktionsposition beweglich angeordnet ist und an dessen in Auszugrichtung vorderen Stirnendbereich ein formstabiles Auszugteil vorgesehen ist, das sich quer zur Auszugrichtung des Flächengebildes erstreckt, wobei dem Auszugteil Führungsmittel zugeordnet sind, die das Auszugteil zwischen der ausgezogenen Funktionsposition und der Ruheposition des Flächengebildes bewegen, und mit Sicherungsmitteln, die das Auszugteil in der ausgezogenen Funktionsposition des Flächengebildes arretieren.

Eine solche Laderaumschutzvorrichtung ist in Form einer Laderaumabtrennung aus der DE 199 46 382 A1 bekannt. Bei der bekannten Laderaumabtrennung ist ein flexibles Flächengebilde in Form eines Trennnetzes vorgesehen, das auf einer Wickelwelle auf- und abwickelbar gehalten ist. Die Wickelwelle ist in einem Kassettengehäuse drehbeweglich gelagert, das im Bereich einer Rückseite einer Rückenlehnenanordnung einer Fondsitzbank im Laderaum befestigt ist. An einem in Auszugrichtung vorderen Stirnendbereich weist das Trennnetz eine Auszugleiste auf, an der zwei am Kassettengehäuse gelagerte Führungsarme gelenkig angreifen. Die Führungsarme sind durch eine Antriebseinheit betätigbar und führen zueinander gegensinnige, aber miteinander synchronisierte Schwenkbewegungen durch, die ein Ausziehen oder Einfahren der Auszugleiste und damit auch des Flächengebildes bewirken. Die Auszugleiste ist an ihren gegenüberliegenden Stirnseiten mit jeweils einem Einhängehaken versehen. Den Einhängehaken ist für die ausgezogene Funktionsposition des Trennnetzes im Dachbereich eine Sicherungsanordnung in Form von Steckaufnahmen an gegenüberliegenden Dachholmen zugeordnet, die eine Sicherung des Trennnetzes in der ausgezogenen Funktionsposition bewirken. Mittels dieser Steck- oder Halteaufnahmen ist das Trennnetz in seiner ausgezogenen Funktionsposition, in der es etwa vertikal nach oben ragt, sicher gehalten, so dass das Trennnetz auch als Rückhaltefunktion für in das Trennnetz bei Fahrzeugaufprallbelastungen oder anders gearteten starken Verzögerungen umhergeschleuderte Gepäckstücke dienen kann.

Aus der DE 196 05 907 A1 ist es darüber hinaus bekannt, ein formstabiles Trenngebilde mittels einer Schiebeführung im Bereich einer Rückenlehnenanordnung eines Fahrzeugsitzes höhenverschiebbar zu halten. In einem Dachbereich sind Halteaufnahmen vorgesehen, die das formstabile Trenngebilde in der nach oben geschobenen Funktionsposition sichern, falls Gepäckstücke aus dem Laderaum gegen das Trenngebilde geschleudert werden.

Aufgabe der Erfindung ist es, eine Laderaumschutzvorrichtung der eingangs genannten Art zu schaffen, die eine sichere Halterung des Flächengebildes in seiner Funktionsposition unabhängig von laderaumseitigen Gegebenheiten ermöglicht.

Diese Aufgabe wird dadurch gelöst, dass die Sicherungsmittel - in Auszugrichtung des Flächengebildes gesehen - zumindest ungefähr auf gleicher Höhe oder hinter einem die Ruheposition des Auszugteiles definierenden Raumabschnitt angeordnet sind. Das Flächengebilde kann sowohl als zumindest ungefähr in Fahrzeughochrichtung ausziehbare Laderaumabtrennung als auch als zumindest ungefähr horizontal ausziehbare Laderaumabdeckung ausgeführt sein. Es ist auch möglich, das Flächengebilde sowohl als Laderaumabtrennung als auch als Laderaumabdeckung vorzusehen. Vorzugsweise ist das Auszugteil in seiner Ruheposition etwa auf Höhe einer Fahrzeugbordkante des Kraftfahrzeugs angeordnet. Dementsprechend sind auch die Sicherungsmittel zumindest ungefähr in diesem Bereich angeordnet. Falls das Flächengebilde nach oben ausziehbar ist, bedeutet die Formulierung, dass die Sicherungsmittel hinter einem die Ruheposition des Auszugteiles definierenden Raumabschnitt angeordnet sind, dass die Sicherungsmittel unterhalb des Auszugteiles angeordnet sind. Falls das Auszugteil und damit auch das Flächengebilde etwa horizontal ausziehbar sind, liegen die Sicherungsmittel in einer horizontalen Ebene hinter dem Raumabschnitt. Die Sicherungsmittel dienen dazu, das Flächengebilde und damit das Auszugteil in der ausgezogenen Funktionsposition, in der das Flächengebilde etwa vertikal oder etwa horizontal aufgespannt ist, rückhaltesicher auszuführen. Dies bedeutet, dass auch im Laderaum befindliche Gegenstände, die durch starke Verzögerungen des Kraftfahrzeugs, wie einem Fahrzeugaufprall oder eine starke Bremsfunktion, in das aufgespannte flexible Flächengebilde hineingeschleudert werden, durch das Flächengebilde sicher zurückgehalten werden. Dadurch, dass die Sicherungsmittel nicht in einem Dachbereich oder in einem Karosseriesäulenbereich des Kraftfahrzeugs angeordnet, sondern vielmehr im Bereich des Raumabschnittes positioniert sind, ist die Positionierung der Laderaumschutzvorrichtung unabhängig von den karosserieseitigen Gegebenheiten des Kraftfahrzeugs. Dadurch ergeben sich vielfältige Raumaufteilungsmöglichkeiten für den Fahrzeuginnenraum des Kraftfahrzeugs. Dennoch wird die gewünschte Rückhaltefunktion insbesondere bei Ausgestaltung der Laderaumschutzvorrichtung als Laderaumabtrennung erreicht. Die kompakt abgelegte Ruheposition des Flächengebildes kann durch ein Aufwickeln auf eine Wickelwelle oder durch ein kompaktes Zusammenfalten oder Zusammenschieben nach Art eines Vorhangs oder ähnlichem verwirklicht sein. Erfindungsgemäß ist es möglich, eine ausreichende Rückhaltefunktion für das Flächengebilde in seiner ausgezogenen, insbesondere aufgespannten, Funktionsposition zu erreichen, ohne das Auszugteil fahrzeugseitig in entsprechenden Halteaufnahmen zu verankern. Dadurch können fahrzeugseitige Halteaufnahmen entfallen, so dass insbesondere im Karosseriesäulen- und Dachrahmenbereich wie auch an zugehörigen Innenverkleidungen keine Vorkehrungen mehr für die Anbringung derartiger Halteaufnahmen getroffen werden müssen. Es ergeben sich für den Fahrzeuginnenraum und die Innenraumverkleidungen verbesserte Gestaltungsmöglichkeiten.

In Ausgestaltung der Erfindung sind die Führungsmittel zumindest ungefähr auf gleicher Höhe oder hinter dem Raumabschnitt gelagert. Die Lagerung der Führungsmittel befindet sich somit, falls der Raumabschnitt für die Ruheposition des Auszugteiles etwa im Bereich der Fahrzeugbordkante vorgesehen ist, ebenfalls vorzugsweise knapp unterhalb der Fahrzeugbordkante. Unter der Lagerung der Führungsmittel ist die fahrzeug- bzw. laderaumseitige Lagerung der Führungsmittel zu verstehen. Selbstverständlich ist es aber möglich, dass die Führungsmittel in der ausgezogenen Funktionsposition des Auszugteils auch über diesen Raumabschnitt und damit vorzugsweise über die Fahrzeugbordkante frei nach oben abragen.

In weiterer Ausgestaltung der Erfindung sind Antriebsmittel zur Betätigung der Führungsmittel vorgesehen. Vorzugsweise ist als Antriebsmittel eine elektrische Antriebseinheit vorgesehen, die das Auszugteil wenigstens aus der Ruheposition des Flächengebildes heraus in Richtung der ausgezogenen Funktionsposition bewegt. Die elektrische Antriebseinheit kann die Führungsmittel auch wieder aus der ausgezogenen Funktionsposition in die abgelegte Ruheposition zurückführen. Es ist aber auch möglich, einen weiteren Antrieb in Form eines Rückstellantriebes, insbesondere einer Rückholfeder, vorzusehen, der das Flächengebilde mechanisch wieder in die kompakt abgelegte Ruheposition zurückführt. Eine derartige Rückholfeder ist insbesondere dann vorteilhaft, wenn das Flächengebilde auf einer Wickelwelle auf- und abwickelbar gehalten ist. Die Rückholfeder kann dann als Schraubenfeder in der Wickelwelle integriert sein.

In weiterer Ausgestaltung der Erfindung weisen die Führungsmittel wenigstens ein Führungselement auf, das zumindest während einer Auszugbewegung an dem Auszugteil angreift und translatorisch und/oder rotatorisch gelagert ist. Vorzugsweise ist hierzu ein mechanisches Führungselement vorgesehen, das als reiner Schwenkarm, als translatorisch beweglicher Teleskoparm oder ähnliches ausgeführt sein kann.

In weiterer Ausgestaltung der Erfindung ist das wenigstens eine Führungselement lösbar mit dem Auszugteil verbindbar. Dabei ist es insbesondere möglich, bei Nichtbedarf das Auszugteil von dem wenigstens einen Führungselement zu entfernen und einer entsprechend rechtwinklig dazu beweglichen Führungsanordnung zuzuordnen. Falls das wenigstens eine Führungselement das Auszugteil und damit das Flächengebilde in die vertikale Funktionsposition überführt, so kann die Führungsanordnung, der das Auszugteil alternativ zuzuordnen ist, dazu dienen, das Flächengebilde und damit das Auszugteil in die etwa horizontale Funktionsposition zu überführen. Bei einer solchen Ausführungsform dient das Flächengebilde sowohl als Laderaumabtrennung als auch als Sichtschutz für einen Laderaumbereich unterhalb der Fahrzeugbordkante und damit als Laderaumabdeckung.

In weiterer Ausgestaltung der Erfindung sind als Führungsmittel Höhenverlagerungsmittel vorgesehen, die das Auszugteil innerhalb des Laderaumes zwischen einer unteren Ruheposition und einer oberen Auszugposition verlagern, in der das Auszugteil in einem Dachbereich des Laderaumes positioniert ist. Diese Ausgestaltung dient als etwa vertikal aufspannbare Laderaumabtrennung.

In weiterer Ausgestaltung der Erfindung weisen die Höhenverlagerungsmittel wenigstens ein Schub-/Schwenkgestänge auf, das mittels eines translatorisch beweglichen Zug-/Druckmittels mit einer Antriebseinheit in Verbindung steht und das derart stationär rotatorisch gelagert ist, dass eine translatorische Bewegung eines mit dem Zug-/Druckmittel verbundenen Gelenkpunktes des Schub-/Schwenkgestänges zu einer Aufstellbewegung eines Halteabschnittes des Schub-/Schwenkgestänges führt, der mit dem Auszugteil verbunden ist. Dadurch ist es möglich, durch eine horizontale Antriebsbewegung eine vertikale Auszugbewegung des Flächengebildes zu bewirken.

In weiterer Ausgestaltung der Erfindung weisen die Höhenverlagerungsmittel mechanische Kraftübertragungsmittel auf, die eine Antriebsbewegung quer zu einer Ausziehrichtung des Flächengebildes in eine Auszugbewegung des Auszugteiles in Ausziehrichtung übertragen. Auch hierdurch wird eine rechtwinklig zur eigentlichen Auszugbewegung erfolgende Antriebsbewegung dazu eingesetzt, um die entsprechend quer verlaufende Auszugbewegung zu bewirken. Vorzugsweise verläuft die Führung entsprechender Antriebselemente der Antriebsmittel etwa horizontal und die entsprechende Auszugbewegung in entsprechender Weise rechtwinklig hierzu und damit etwa vertikal.

In weiterer Ausgestaltung der Erfindung greift auf gegenüberliegenden Seiten des Auszugteiles jeweils ein Höhenverlagerungsmittel an, und es sind Synchronisationsmittel vorgesehen, die die Antriebsmittel derart steuern, dass die Höhenverlagerungsmittel zeitgleich und um gleiche Wegbeträge bewegbar sind. Dadurch ist es möglich, das Auszugteil parallel zu verlagern, so dass auf das gesamte Flächengebilde während der Auszugbewegung über die gesamte Breite eine gleichmäßige Zugspannung aufgebracht wird.

In weiterer Ausgestaltung der Erfindung weisen die Sicherungsmittel wenigstens ein stationär angeordnetes Sperrglied auf, das einem das Auszugteil in der ausgezogenen Funktionsposition haltenden Stützabschnitt der Führungsmittel zugeordnet ist und den Stützabschnitt in der Funktionsposition rückhaltesicher mechanisch arretiert. Das Sperrglied bildet vorzugsweise eine Gegenbelastung gegenüberliegend zu einem Angriffspunkt des Auszugteiles am Stützabschnitt - auf einen imaginären Drehpunkt des Stützabschnittes an einem laderaumseitigen Fahrzeugteil bezogen.

In weiterer Ausgestaltung der Erfindung ist das Sperrglied zwischen einer Sperrposition und einer Freigabeposition beweglich gelagert. Je nach Stellung der Führungsmittel kann somit eine Arretierung oder eine Freigabe erzielt werden.

In weiterer Ausgestaltung der Erfindung sind Steuerungsmittel vorgesehen, die das Sperrglied abhängig von der Position der Führungsmittel in die Arretierstellung überführen oder aus der Arretierstellung lösen. Die Steuerungsmittel sind insbesondere mechanisch ausgeführt, wobei das Sperrglied vorzugsweise in wenigstens einer Richtung federbelastet ist. Es ist auch möglich, die Steuerungsmittel elektromechanisch, elektromagnetisch, elektrisch, elektronisch, pneumatisch oder hydraulisch auszuführen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform einer erfindungsgemäßen Laderaumschutzvorrichtung für ein Kraftfahrzeug,
- Fig. 2: die Laderaumschutzvorrichtung nach Fig. 1 in einer geringfügig anderen Bewegungsposition,
- Fig. 3 bis 5: Höhenverlagerungsmittel einer weiteren Laderaumschutzvorrichtung ähnlich den Fig. 1 und 2 und
- Fig. 6: die Höhenverlagerungsmittel nach den Fig. 3 bis 5 in perspektivischer Darstellung.

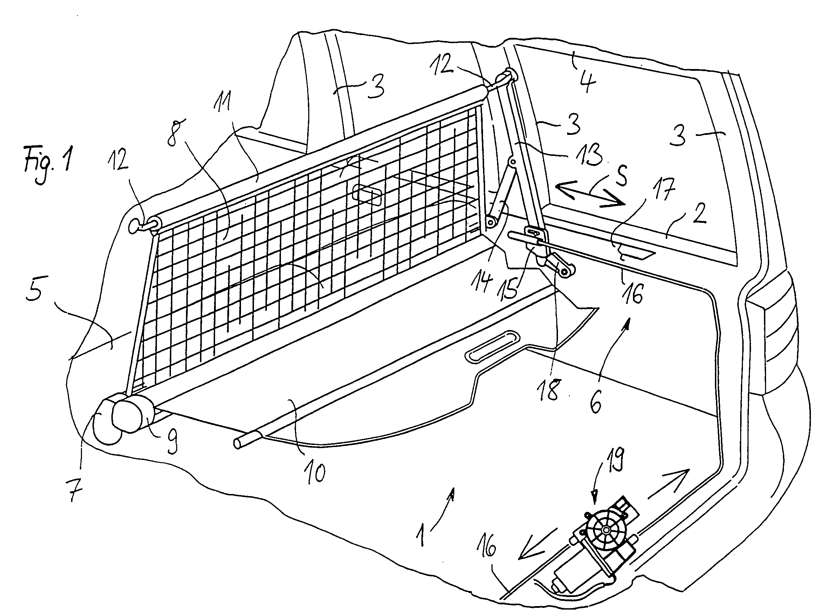

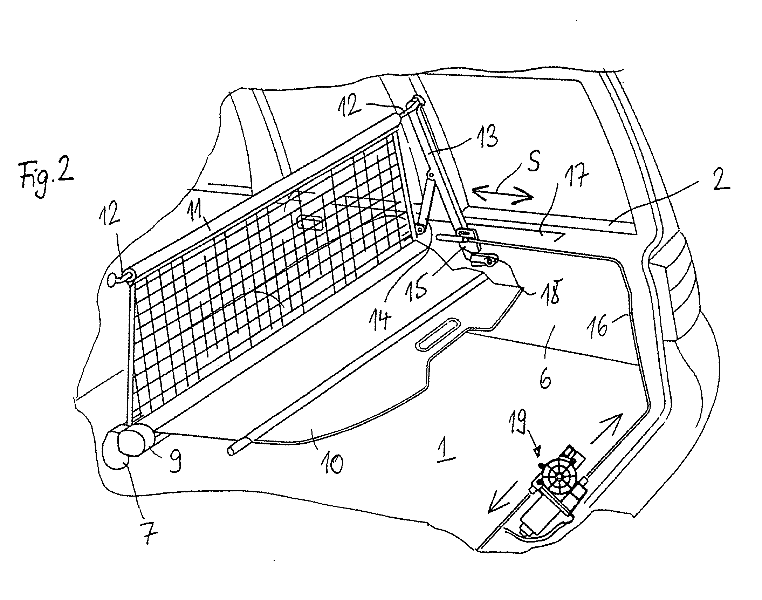

Ein Kraftfahrzeug in Form eines Kombi-Personenkraftwagens oder einer Großraumlimousine weist, wie in den Fig. 1 und 2 dargestellt, einen Laderaum 1 auf, der in einem Heckbereich des Kraftfahrzeugs angeordnet ist und in Fahrzeuglängsrichtung nach vorne durch eine lediglich schematisch dargestellte Fondsitzbank 5 begrenzt ist. Der Laderaum 1 ist auf gegenüberliegenden Fahrzeuglängsseiten von jeweils einer Seitenwand 6 eingeschlossen. Heckseitig ist der Laderaum 1 durch eine nicht näher dargestellte bewegliche Karosserieteilanordnung, insbesondere durch eine Heckklappe, begrenzt. Die Seitenwände 6 sind durch Innenverkleidungsteile gebildet, die mit Seitenbereichen einer Karosserietragstruktur des Kraftfahrzeugs verbunden sind. Bis zu einer Fahrzeugbordkante 2 stellen die Seitenwände 6 geschlossene Wandflächen dar. Auf Höhe der Fahrzeugbordkante 2 beginnen auf gegenüberliegenden Fahrzeugseiten positionierte Seitenscheibenanordnungen, die in Fahrzeuglängsrichtung gesehen durch mehrere Karosseriesäulen 3 voneinander getrennt sind. Die Karosseriesäulen 3 erstrecken sich in Fahrzeughochrichtung bis zu einem Dachbereich, der durch einen Dachholmabschnitt 4 angedeutet ist.

Etwa auf Höhe der Fahrzeugbordkante 2 ist an einer Rückseite einer Rückenlehnenanordnung der Fondsitzbank 5 ein Kassettengehäuse 7 angeordnet, in dem etwa horizontal und in Fahrzeugquerrichtung eine nicht näher dargestellte Wickelwelle angeordnet ist, die um eine Fahrzeugquerachse drehbeweglich in dem Kassettengehäuse 7 gelagert ist. Auf der Wickelwelle ist ein flexibles Flächengebilde, vorliegend in Form eines Trennnetzes 8, gehalten, das von der Wickelwelle abwickelbar oder auf die Wickelwelle aufwickelbar ist. In Aufwickelrichtung wirkt auf die Wickelwelle in nicht näher dargestellter Weise eine Rückholfeder, die das Trennnetz 8 innerhalb des Kassettengehäuses 7 auf die Wickelwelle aufwickelt und damit in eine kompakte Ruheposition überführt. Das Kassettengehäuse 7 dient als Umgrenzung eines Raumabschnittes, in dem das Trennnetz 8 in seiner Ruheposition abgelegt ist.

An dem Kassettengehäuse 7 ist noch ein zweites Gehäuse 9 für eine horizontal ausziehbare Laderaumabdeckung 10 befestigt. Für die Funktion des Trennnetzes 8 und der nachfolgend beschriebenen Laderaumschutzvorrichtung ist diese Laderaumabdeckung 10 nicht maßgeblich. Das Gehäuse 9 kann von dem Kassettengehäuse 7 gelöst werden.

Das Trennnetz 8 ist in eine in Fig. 1 dargestellte Funktionsposition ausziehbar. In dieser Funktionsposition ist das Trennnetz 8 etwa vertikal und damit in Fahrzeughochrichtung aufgespannt und erstreckt sich über nahezu die gesamte Höhe des Laderaumes oberhalb der Fahrzeugbordkante 2 wie auch über einen Großteil der Breite des Fahrzeuginnenraumes. An einem in Auszugrichtung vorderen Stirnende des Trennnetzes 8 ist ein Auszugteil 11 angeordnet, das sich über die gesamte Breite des vorderen Stirnendbereiches des Trennnetzes 8 erstreckt und formstabil gestaltet ist. Vorzugsweise ist das Auszugteil 11 als metallische Auszugstange oder als metallische Auszugleiste ausgeführt. Das Auszugteil 11 weist auf seinen gegenüberliegenden Stirnseiten jeweils ein Haltemittel in Form eines Einhängehakens 12 auf. Die Gesamtbreite des Auszugteiles 11, die durch den Abstand der gegenüberliegenden, außen liegenden Stirnseiten der beiden Einhängehaken 12 zueinander bemessen ist, ist geringer als der Abstand der gegenüberliegenden Innenraumseitenabschnitte des Fahrzeuginnenraumes auf Höhe des Auszugteiles 11 in seiner ausgezogenen Funktionsposition, so dass auch in der ausgezogenen Funktionsposition des Auszugteiles 11 zwischen den außen liegenden Stirnseiten der Einhängehaken 12 und dem jeweils benachbarten Innenraumseitenabschnitt jeweils noch ein Freiraum verbleibt. Das Auszugteil 11 erstreckt sich somit in der ausgezogenen Funktionsposition frei zwischen den gegenüberliegenden Innenraumseitenabschnitten des Fahrzeuginnenraumes. Die Innenraumseitenabschnitte werden insbesondere durch Innenverkleidungen der Karosseriesäulen 3 gebildet.

Um das Auszugteil 11 aus der Ruhestellung, in der das Auszugteil 11 im Bereich eines Auszugschlitzes auf dem Kassettengehäuse 7 aufliegt, in die in Fig. 1 dargestellte ausgezogene Funktionsposition des Trennnetzes 8 zu überführen, sind Höhenverlagerungsmittel vorgesehen, die nachfolgend näher beschrieben werden.

Die Höhenverlagerungsmittel weisen auf beiden Seiten des Trennnetzes 8 jeweils Einschub-/Schwenkgestänge 13 bis 15 auf, von den aus Übersichtlichkeitsgründen lediglich das in normaler Fahrtrichtung rechte Schub-/Schwenkgestänge dargestellt ist. Das Schub-/Schwenkgestänge umfasst einen als Stützabschnitt dienenden, formstabilen Stützarm 13, dessen Länge beim dargestellten Ausführungsbeispiel geringfügig größer ist als die maximale Auszuglänge des Trennnetzes 8. Der Stützarm 13 weist eine nicht näher bezeichnete Halteaufnahme auf, in die der jeweilige Einhängehaken 12 lösbar einsetzbar ist. Dem Stützarm 13 ist als Teil des Schub-/Schwenkgestänges ein als Kraftübertragungsmittel im Sinne der Erfindung dienender Aufstellarm 14 zugeordnet, der an einem unteren Ende fahrzeugseitig stationär um eine in Fahrzeugquerrichtung verlaufende Schwenkachse schwenkbeweglich und an seinem gegenüberliegenden Stirnende an dem Stützarm 13 um eine parallele Schwenkachse gelenkig gelagert ist. Der Aufstellarm 14 greift etwa auf halber Länge an dem Stützarm 13 an. Der Stützarm 13 ist mit seinem der Halteaufnahme gegenüberliegenden Endabschnitt mittels eines Führungsgliedes 15 in einer in Fahrzeuglängsrichtung verlaufenden Längsführung 17 translatorisch in Richtung des Doppelpfeiles S beweglich. Die Länge der Längsführung 17 ist so ausgelegt, dass der Stützarm 13 aus der Funktionsposition gemäß Fig. 1 bis in eine nahezu flach liegende Position zum Heckbereich hin bewegt werden kann. Die Längsführung 17 ist in dem Verkleidungsteil der Seitenwand 6 integriert, wobei die Längsführung 17 einen nach oben offenen Längsschlitz aufweist, dessen Breite geringfügig breiter als die korrespondierende Breite des Stützarmes 13 ist. Das Führungsglied 15 verläuft nahezu vollständig verdeckt innerhalb der Längsführung 17. Das Führungsglied 15 ist ausschließlich translatorisch in Fahrzeuglängsrichtung in der Längsführung 17 beweglich gelagert. Da der Stützarm 13 mit seinem unteren Endabschnitt neben der translatorischen Bewegung auch eine Schwenkbewegung durchführt, ist der Stützarm 13 mittels eines in den Fig. 1 und 2 nicht näher bezeichneten Führungszapfens in einer in Fahrzeuglängsrichtung ausgerichteten, geradlinigen Kulissenführung des Führungsgliedes 15 gehalten. Das Führungsglied 15 ist somit relativ zu dem Führungszapfen des Stützarmes 13, der fest mit dem Stützarm 13 verbunden ist, linearbeweglich in den Grenzen der Kulissenführung verschiebbar.

Das Führungsglied 15 wird durch ein Zug-/Druckmittel 16 in Fahrzeuglängsrichtung innerhalb der Längsführung 17 bewegt. Das Zug-/Druckmittel 16 wird durch eine in den Fig. 1 und 2 schematisch angedeutete Antriebseinheit 19 betätigt. Die Antriebseinheit 19 ist mit Synchronisationsmitteln versehen, die zeitgleich und um gleiche Wegbeträge beide Zug-/Druckmittel 16 auf den gegenüberliegenden Seiten des Trennnetzes 8 ansteuern.

Sobald nun der Stützarm 13 aus seiner nicht dargestellten, nahezu flach liegenden Ruheposition innerhalb der Längsführung 17, in der das Führungsglied 15 sich in seiner hinteren Endposition befindet, durch die Antriebseinheit 19 und das Zug-/Druckmittel 16 nach vorne bewegt wird, bewirkt die Kopplung mit dem Aufstellarm 14 zwangsläufig ein Aufrichten des Stützarmes 13 mit seinem vorderen, die Halteaufnahme aufweisenden Frontabschnitt. Dies führt zwangsläufig dazu, dass das Auszugteil 11 aus seiner Ruheposition in Fahrzeughochrichtung nach oben gezogen wird. Gleichzeitig spannt sich entsprechend zwangsläufig das Trennnetz 8 nach oben auf.

Um zu gewährleisten, dass das Trennnetz 8 auch eine Rückhaltefunktion für aus dem Laderaum in das Trennnetz 8 geschleuderte Gegenstände bildet, sind den gegenüberliegenden Stützarmen 13 Sicherungsmittel, vorliegend in Form jeweils eines Sperrgliedes 18, zugeordnet. Jedes Sperrglied 18 ist als schwenkbewegliche Sperrklinke ausgeführt und hintergreift in der in Fig. 1 dargestellten Sperrposition einen unteren Stirnendbereich des unteren Endabschnittes des Stützarmes 13. Das Sperrglied 18 wird ausgesteuert durch eine Steuerkurve an einem unteren Rand des Führungsgliedes 15. Das Sperrglied 18 weist zwei in Fahrzeugquerrichtung zueinander versetzte Konturabschnitte auf. Der zur Laderaummitte hin innen liegende Konturabschnitt dient als Steuerteil für die Steuerkurve des Führungsgliedes 15. Der außen liegende Konturabschnitt dient als Sperrklinkenabschnitt, da dieser in der Sperrposition den Stützarm 13 blockiert. Das Sperrglied 18 ist in Richtung seiner Sperrposition durch eine nicht näher dargestellte Federanordnung federbelastet. Der als Steuerteil dienende Konturabschnitt des Sperrgliedes 18 ist derart mit einer Anlaufschräge versehen, dass bei einer Bewegung des Führungsgliedes 15 zum Heckbereich des Laderaumes 1 hin das Sperrglied 18 zwangsläufig nach unten gedrückt wird, wodurch der Sperrklinkenabschnitt den Endabschnitt des Stützarmes 13 freigibt. Die Relativbeweglichkeit des Führungsgliedes 15 relativ zu dem Stützarm 13 ermöglicht die gewünschte Steuerbewegung, da das Führungsglied 15 über die Länge der Kulissenführung translatorisch bewegt werden kann, obwohl der Stützarm 13 durch das Sperrglied 18 blockiert ist. Ein Zurückziehen des Führungsgliedes 15 bewirkt somit ein Aussteuern des Sperrgliedes 18 nach unten, wodurch der Stützarm 13 für eine Bewegung nach hinten freigegeben wird. Die Freigabestellung für den Stützarm 13 ist in Fig. 2 dargestellt.

Bei einem nicht dargestellten Ausführungsbeispiel der Erfindung ist die Laderaumabdeckung entfernt. Das Trennnetz 8 ist aus einem blickdichteren Material gestaltet, als es das Trennnetz gemäß den Fig. 1 und 2 ist. Dieses nicht dargestellte Trennnetz ist zusätzlich zu seiner Funktion als nach oben aufgespannte Laderaumabtrennung auch als Laderaumabdeckung einsetzbar. Hierzu wird in einfacher Weise das Trennnetz in der eingezogenen Ruheposition des Auszugteiles aus den Halteaufnahmen der Stützarme ausgehängt und etwa horizontal nach hinten zum Heckbereich ausgezogen. Im Heckbereich können in einfacher Weise laderaumseitige Halteaufnahmen vorgesehen sein, in die die Einhängehaken einhängbar sind. Grundsätzlich ist es auch möglich, auch die Auszugbewegung zur horizontalen Laderaumabdeckung nach hinten vollautomatisch durchzuführen. Bei einer solchen Variante werden die Einhängehaken in einfacher Weise in horizontal bewegliche Führungsmittel einer weiteren Antriebseinheit eingehängt, die das Auszugteil und damit auch das Flächengebilde zum Heckbereich hin ausziehen.

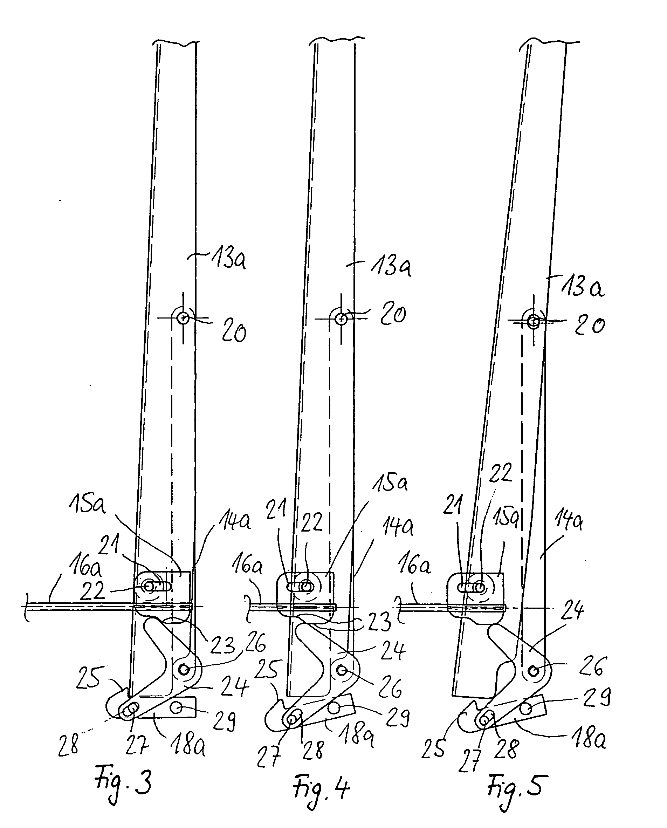

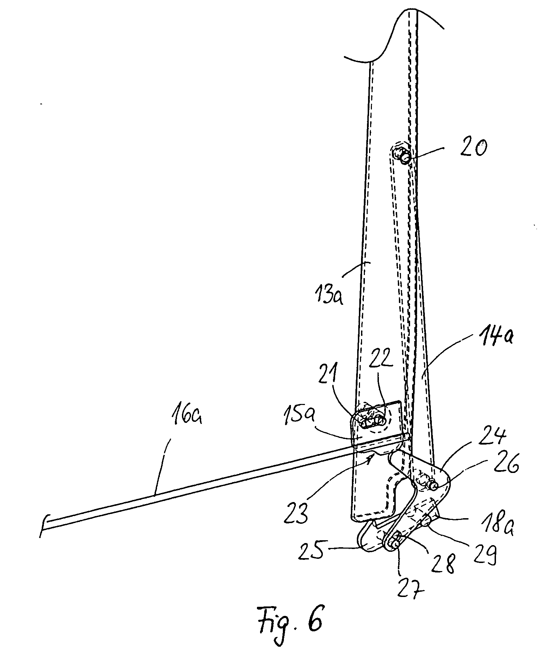

Die Ausführungsform nach den Fig. 3 bis 6 offenbart Höhenverlagerungsmittel, die vom grundsätzlichen Aufbau her der Ausführungsform nach den Fig. 1 und 2 entsprechen. Funktionsgleiche Teile sind mit identischen Bezugszeichen unter Hinzufügung des Buchstaben a versehen. Wesentlicher Unterschied ist die modifizierte Gestaltung der Sicherungsmittel. Auch die Sicherungsmittel gemäß den Fig. 3 bis 6 weisen für jeden Stützarm 13a ein Sperrglied 18a auf, das um eine Schwenkachse 29 schwenkbeweglich gelagert ist. Das Sperrglied 18a ist nach Art einer Sperrklinke ausgeführt und weist eine Rastnase 25 auf, die in der Sperrposition einen unteren Randbereich des Stützarmes 13a hintergreift (Fig. 3). Auch bei dieser Ausführungsform wird eine Bewegung des Stützarmes 13a zum einen durch ein translatorisch bewegliches Führungsglied 15a und zum anderen durch einen Aufstellarm 14a bewirkt. Das Führungsglied 15a wird mittels eines Zug-/Druckmittels 16a linear bewegt. Das Führungsglied 15a weist eine als Längsschlitz ausgeführte Kulissenführung 21 auf, die parallel zur Bewegungsrichtung des Zug-/Druckmittels verläuft und in der ein Führungszapfen 22 des Stützarmes 13a relativ verschiebbar angeordnet ist. Das Führungsglied 15a weist an seinem unteren Rand eine Steuerkurve 23 auf, die allerdings nicht - wie bei dem Ausführungsbeispiel nach den Fig. 1 und 2 - direkt auf das Sperrglied 18a, sondern vielmehr auf einen L-förmigen Übertragungshebel 24 wirkt, der um die untere Schwenkachse des Aufstellarmes 14a schwenkbeweglich gelagert ist. Der Übertragungshebel 24 ist durch eine nicht dargestellte Schenkelfeder in der Darstellung gemäß den Fig. 3 bis 5 im Uhrzeigersinn federbelastet, so dass ein Hebelschenkel permanent gegen die Steuerkurve 23 des Führungsgliedes 15a gedrückt wird. Der andere Hebelschenkel des Übertragungshebels 24 ist mittels einer Langlochführung 28 mit einem Steuerzapfen 27 des Sperrgliedes 18a verbunden. Die beschriebene Kinematik bewirkt die gleichen Funktionen wie bei der Ausführungsform nach den Fig. 1 und 2.

Sobald das Führungsglied 15a aus der Sperrposition des Sperrgliedes 18a gemäß Fig. 3 mittels des Zug-/Druckmittels 16a nach hinten gezogen wird, bewirkt eine entsprechende Anlaufschräge der Steuerkurve 23 ein Auslenken des Übertragungshebels 24 nach unten. Hierdurch wird das Sperrglied 18a ebenfalls nach unten geschwenkt, wodurch die Rastnase 25 den Stützarm 13a freigibt. Nun schlägt der Führungszapfen 22 an dem vorderen Ende der Kulissenführung 21 des Führungsgliedes 15a an, so dass das Führungsglied 15a bei einer weiteren Längsbewegung nach hinten zwangsläufig auch den Stützarm 13a nach hinten mitnimmt. Der Stützarm 13a vollführt nun eine durch das Nachhintenschwenken des Aufstellarmes 14a definiert gesteuerte, allmähliche Absenkbewegung analog der Ausführungsform nach den Fig. 1 und 2. Das erneute Aufstellen des Stützarmes 13a und damit das Überführen des Auszugteiles und des Trennnetzes in die ausgezogene Funktionsposition erfolgt in entsprechend umgekehrter Reihenfolge.

Bei einer nicht dargestellten Ausführungsform der Erfindung sind das Auszugteil 11 und die beiden das Trennnetz auf gegenüberliegenden Seiten flankierenden Stützarme zu einem einstückigen Rahmenteil miteinander verbunden. Im übrigen entspricht diese Ausführungsform den gemäß den Fig. 1 bis 6 beschriebenen Ausführungsformen.

## Patentansprüche

1. Laderaumschutzvorrichtung für ein Kraftfahrzeug mit wenigstens einem flexiblen Flächengebilde, das zwischen einer kompakt abgelegten Ruheposition und einer ausgezogenen Funktionsposition beweglich angeordnet ist und an dessen in Auszugrichtung vorderen Stirnendbereich ein formstabiles Auszugteil vorgesehen ist, das sich quer zur Auszugrichtung des Flächengebildes erstreckt, wobei dem Auszugteil Führungsmittel zugeordnet sind, die das Auszugteil zwischen der ausgezogenen Funktionsposition und der Ruheposition des Flächengebildes bewegen, und mit Sicherungsmitteln, die das Auszugteil in der ausgezogenen Funktionsposition des Flächengebildes arretieren,
**dadurch gekennzeichnet,dass**
die Sicherungsmittel (18, 18a) - in Auszugrichtung des Flächengebildes (8) gesehen - zumindest ungefähr auf gleicher Höhe
oder hinter einem die Ruheposition des Auszugteiles (11) definierenden Raumabschnitt angeordnet sind.

2. Laderaumschutzvorrichtung nach Anspruch 1, **dadurch gekennzeichnet, dass** die Führungsmittel (13 bis 15; 13a bis 15a) zumindest ungefähr auf gleicher Höhe oder hinter dem Raumabschnitt gelagert sind.

3. Laderaumschutzvorrichtung nach Anspruch 1, **dadurch gekennzeichnet, dass** Antriebsmittel (16, 19; 16a) zur Betätigung der Führungsmittel (13 bis 15; 13a bis 15a) vorgesehen sind.

4. Laderaumschutzvorrichtung nach Anspruch 2, **dadurch gekennzeichnet, dass** die Führungsmittel wenigstens ein Führungselement (13, 13a) aufweisen, das zumindest während einer Auszugbewegung an dem Auszugteil (11) angreift und translatorisch und/oder rotatorisch gelagert ist.

5. Laderaumschutzvorrichtung nach Anspruch 4, **dadurch gekennzeichnet, dass** das wenigstens eine Führungselement (13) lösbar mit dem Auszugteil (11) verbindbar ist.

6. Laderaumschutzvorrichtung nach Anspruch 1, **dadurch gekennzeichnet, dass** als Führungsmittel Höhenverlagerungsmittel (13 bis 15; 13a bis 15a) vorgesehen sind, die das Auszugteil (11) innerhalb des Laderaumes (1) zwischen einer unteren Ruheposition und einer oberen Auszugposition verlagern, in der das Auszugteil (11) in einem Dachbereich des Laderaumes positioniert ist.

7. Laderaumschutzvorrichtung nach Anspruch 6, **dadurch gekennzeichnet, dass** die Höhenverlagerungsmittel wenigstens ein Schub-/Schwenkgestänge (13 bis 15; 13a bis 15a) aufweisen, das mittels eines translatorisch beweglichen Zug-/Druckmittels (16, 16a) mit einer Antriebseinheit (19) in Verbindung steht und das derart stationär rotatorisch gelagert ist, dass eine translatorische Bewegung eines mit dem Zug-/Druckmittel (16, 16a) verbundenen Gelenkpunktes des Schub-/Schwenkgestänges zu einer Aufstellbewegung eines Halteabschnittes des Schub-/Schwenkgestänges führt, der mit dem Auszugteil (11) verbunden ist.

8. Laderaumschutzvorrichtung nach Anspruch 6, **dadurch gekennzeichnet, dass** die Höhenverlagerungsmittel mechanische Kraftübertragungsmittel (14, 14a) aufweisen, die eine Antriebsbewegung quer zu einer Ausziehrichtung des Flächengebildes (8) in eine Auszugbewegung des Auszugteiles (11) in Ausziehrichtung übertragen.

9. Laderaumschutzvorrichtung nach Anspruch 6, **dadurch gekennzeichnet, dass** auf gegenüberliegenden Seiten des Auszugteiles (11) jeweils ein Höhenverlagerungsmittel angreift, und dass Synchronisationsmittel vorgesehen sind, die die Antriebsmittel (19, 16) derart steuern, dass die Höhenverlagerungsmittel zeitgleich und um gleiche Wegbeträge bewegbar sind.

10. Laderaumschutzvorrichtung nach Anspruch 1, **dadurch gekennzeichnet, dass** die Sicherungsmittel wenigstens ein stationär gelagertes Sperrglied (18, 18a) aufweisen, das einem das Auszugteil (11) in der ausgezogenen Funktionsposition haltenden Stützabschnitt (13, 13a) der Führungsmittel zugeordnet ist und den Stützabschnitt in der Funktionsposition rückhaltesicher mechanisch arretiert.

11. Laderaumschutzvorrichtung nach Anspruch 10, **dadurch gekennzeichnet, dass** das Sperrglied (18, 18a) zwischen einer Sperrposition und einer Freigabeposition beweglich gelagert ist.

12. Laderaumschutzvorrichtung nach Anspruch 11, **dadurch gekennzeichnet, dass** Steuerungsmittel (23, 24) vorgesehen sind, die das Sperrglied (18, 18a) abhängig von der Position der Führungsmittel in die Sperrposition oder in die Freigabeposition überführen.
